# EUROPEAN PATENT SPECIFICATION

(11) **EP 1 794 046 B1**
(45) Date of publication and mention of the grant of the patent: **07.10.2009**
(21) Application number: 05787686.4
(22) Date of filing: 22.09.2005
(51) Int. Cl.: B62J 17/02, B62K 11/00

(54) **VEHICLE BODY COVER STRUCTURE IN MOTORCYCLE**
FAHRZEUGAUFBAUABDECKUNGSSTRUKTUR BEI MOTORRÄDERN
STRUCTURE D'ENVELOPPE DE CORS DE VEHICULE DANS UNE MOTOCYCLETTE

(30) Priority: 30.09.2004 JP 2004286092
(43) Date of publication of application: 13.06.2007
(73) Proprietor: HONDA MOTOR CO., LTD., Tokyo 107-8556 (JP)
(72) Inventor: YAMAGUCHI, Masaaki c/o Honda R&D Co., Ltd., Wako-shi, Saitam (JP); PHOLCHAROEN, Sontaya c/o Honda R&D Co., Ltd., Wako-shi, Saitama (JP); UMEZAWA, Hisashi c/o Honda R&D Co., Ltd., Wako-shi, Saitama (JP); OTSUBO, Mamoru c/o Honda R&D Co., Ltd., Wako-shi, Saitama (JP); KODAMA, Makoto c/o Honda R&D Co., Ltd., Wako-shi, Saitama (JP)
(74) Representative: Trossin, Hans-Jürgen
(86) International application number: PCT/JP2005/018059
(87) International publication number: WO 2006/035920

(56) References cited:
- EP-A- 1 362 775
- PATENT ABSTRACTS OF JAPAN vol. 2002, no. 12, 12 December 2002 (2002-12-12) & JP 2002 234476 A (HONDA MOTOR CO LTD), 20 August 2002 (2002-08-20)
- PATENT ABSTRACTS OF JAPAN vol. 2000, no. 01, 31 January 2000 (2000-01-31) & JP 11 278338 A (HONDA MOTOR CO LTD), 12 October 1999 (1999-10-12)

## Description

### Technical Field:

The present invention relates to a motorcycle in which an engine to be disposed below a main pipe is mounted to a vehicle body frame including a headpipe which steerably supports a front fork and the main pipe extending from the head pipe downward and rearward, the head pipe is covered by a front cover from the front, and the main pipe is covered by the main pipe side covers from the sides, and more specifically, to an improved vehicle body cover structure.

### Background Art:

Disclosed in JP-A-2003-320977 is a vehicle body cover structure for a motorcycle in which both sides of the front cover are connected to upper front portions of a pair of left and right main pipe side covers, and a pair of left and right leg shields are detachably attached to the front portions of the main pipe side covers so as to join the upper edges thereof to the both side edges of the front cover smoothly.

In the structure disclosed in JP-A-2003-320977, when the leg shield is removed from the main pipe side cover, there is no member which covers the leg of a rider from the front as a matter of course, and the joint portion of the leg shield with respect to the front cover is visible from the side. Therefore, it is not possible to increase flexibility in design by changing part of the general shape of the vehicle body cover by removing the leg shield from the vehicle body cover.

Also, although provision of a mounting hole for mounting a main key on one of the left and right main pipe side covers is generally accomplished, when the specification of the main key is changed, one of the main pipe side covers must be replaced.

Since the main pipe side cover, which is relatively large cover components, must be replaced, increase in cost is resulted.

### Disclosure of the Invention

The invention is set out in claim 1. Advantageous embodiments of the invention are featured in the dependent claims 2 to 4.

Other aspects and advantages of the invention will be apparent from the following description and the appended claims.

### Brief description of the drawings:

Fig. 1 is a general side view of a motor cycle.
Fig. 2 is an enlarged front view viewed in the direction indicated by an arrow 2 in Fig. 1.
Fig. 3 is a enlarged side view showing a front portions of the vehicle body frame and the vehicle body cover.
Fig. 4 is a drawing viewed in the direction of an arrow 4 in Fig. 1.
Fig. 5 is a drawing viewed in the direction of an arrow 5 in Fig. 3.
Fig. 6 is a cross-sectional view taken along the line 6-6 in Fig. 3.
Fig. 7 is a side view of a leg shield.
Fig. 8 is a cross-sectional view taken along the line 8-8 in Fig. 3.
Fig. 9 is across-sectional view taken along the line 9-9 in Fig. 3.
Fig. 10 is a cross-sectional view taken along the line 10-10 in Fig. 3.
Fig. 11 is a cross-sectional view taken along the line 11-11 in Fig. 3.
Fig. 12 is a cross-sectional view taken along the line 12-12 in Fig. 3.
Fig. 13 is a drawing corresponding to Fig. 5 in a state in which the leg shield is removed.

Note that in the figures, reference numeral 15 denotes a vehicle body frame, 16 denotes a head pipe, 17 denotes a front fork, 20 denotes a main pipe, 36 denotes a front cover, 37 denotes a main pipe side cover, 37a denotes a protruded portion, 38 denotes a leg shield, 40 denotes a main pipe upper cover, 55 denotes a front winker, 94 denotes a main key mounting hole, and E denotes an engine.

### Best Mode for Carrying Out the Invention:

An embodiment of the present invention will now be described based on an example of the present invention shown in attached drawings.

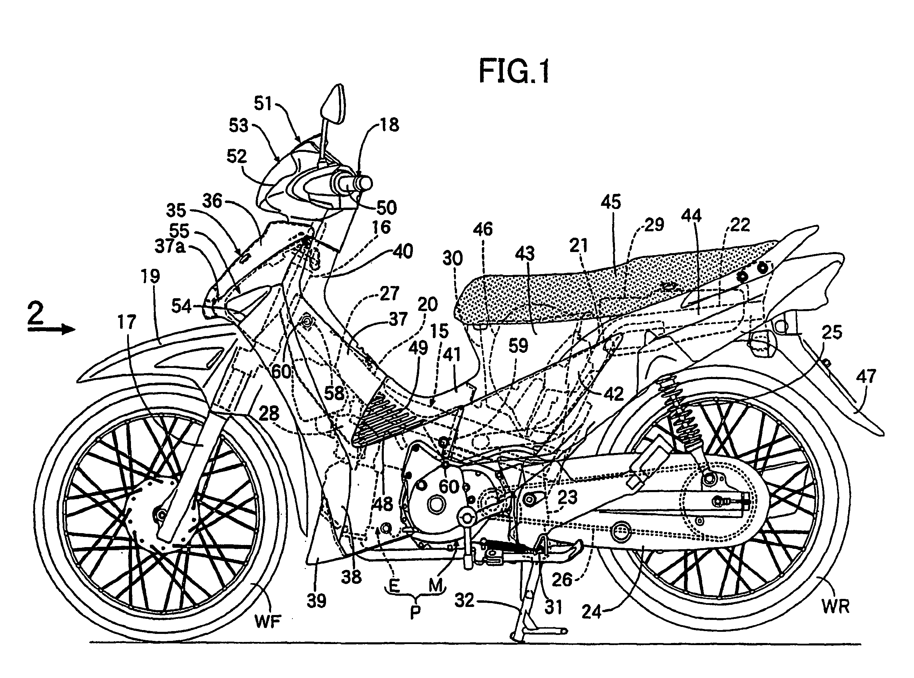

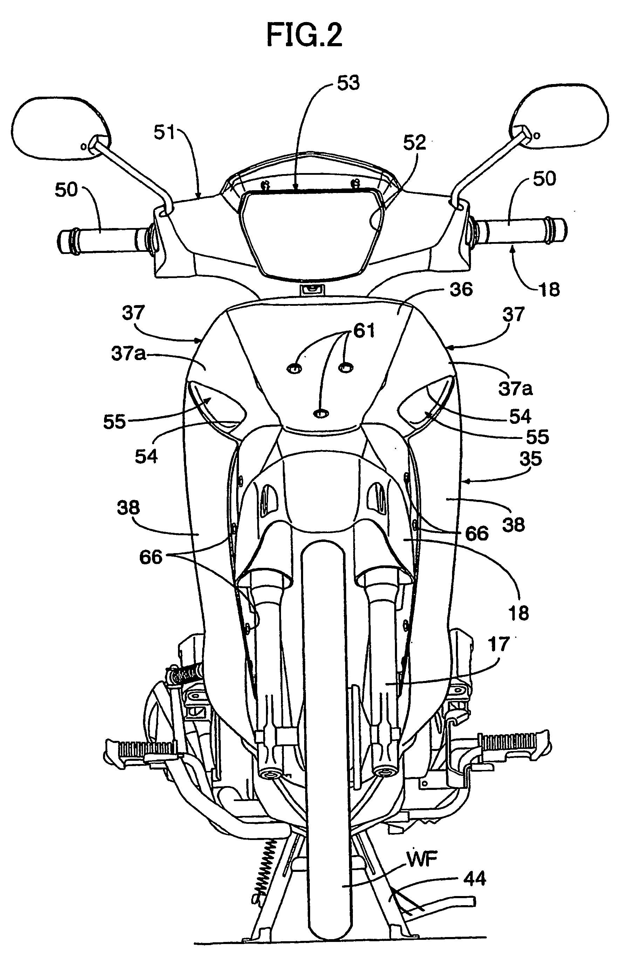

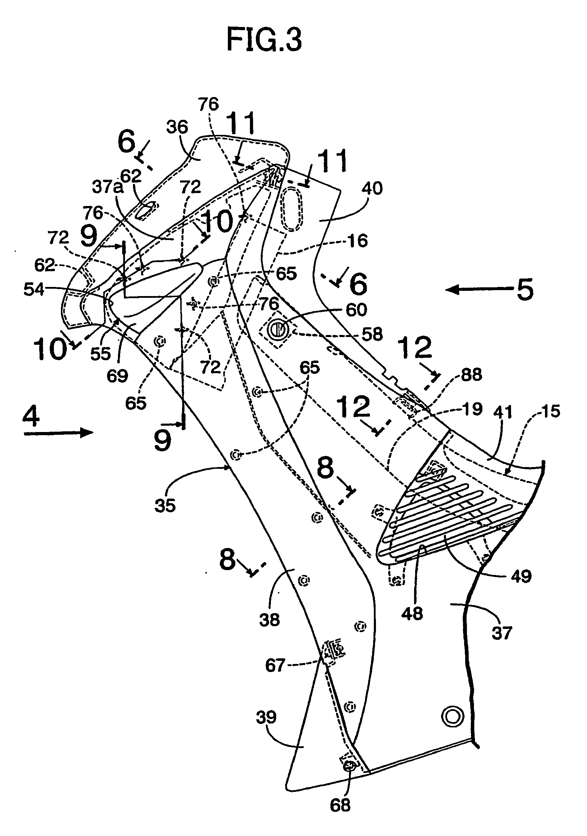

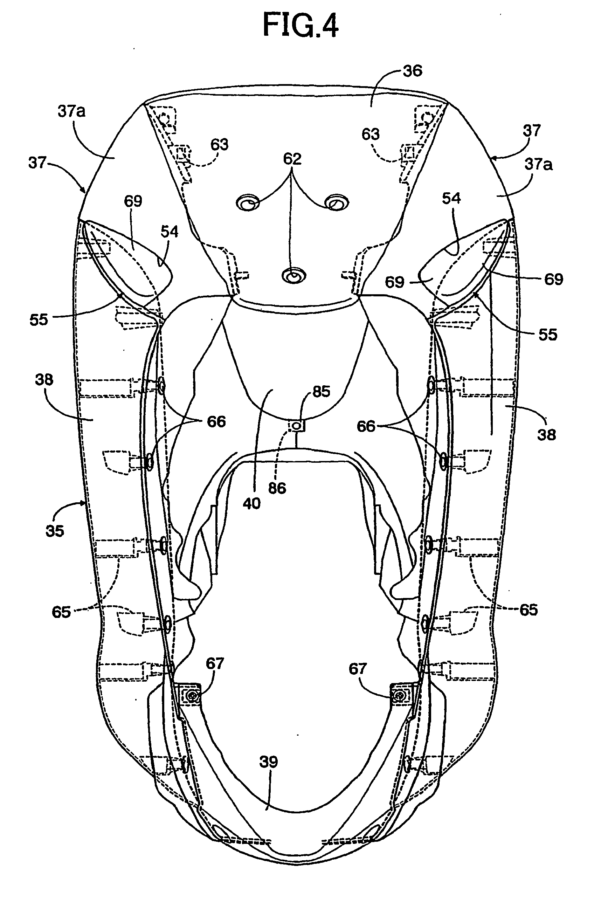

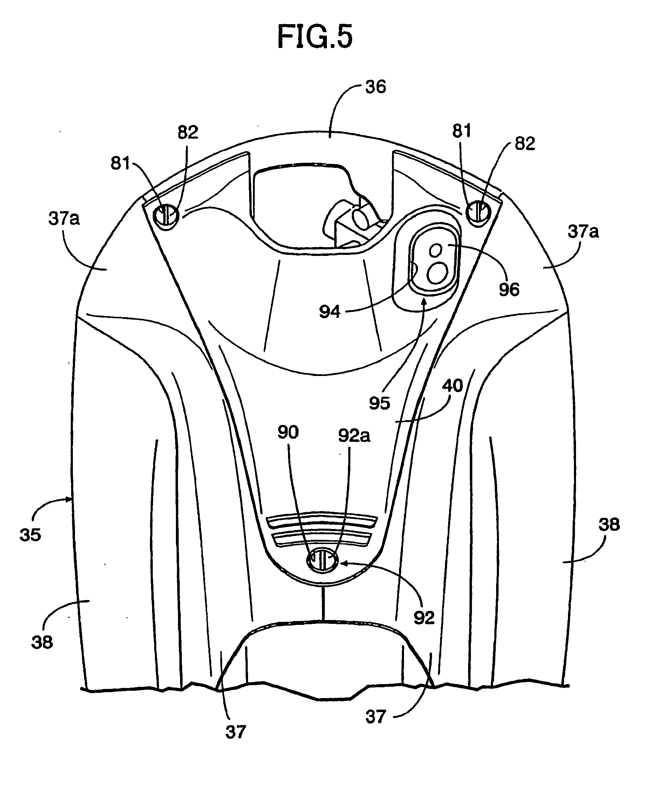

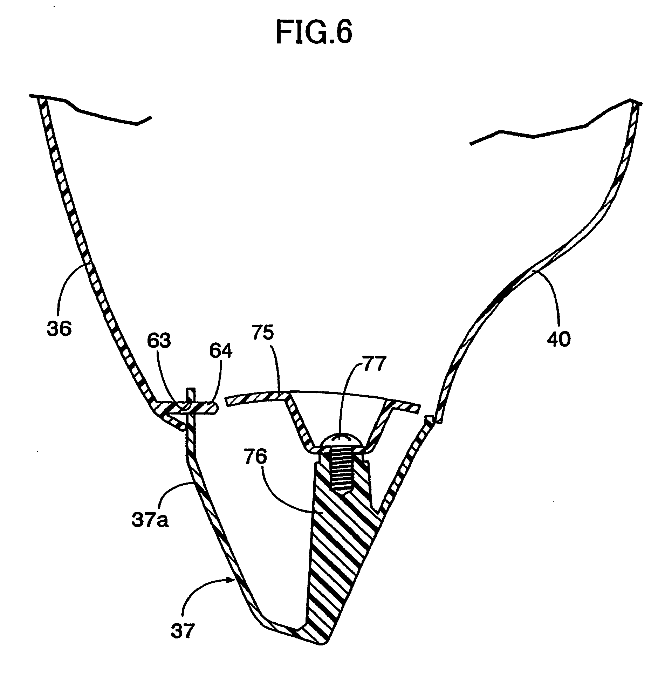

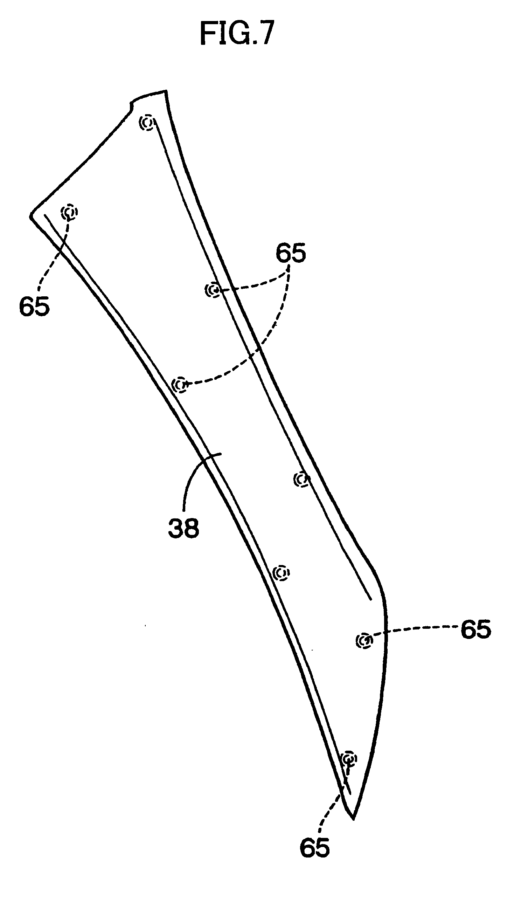

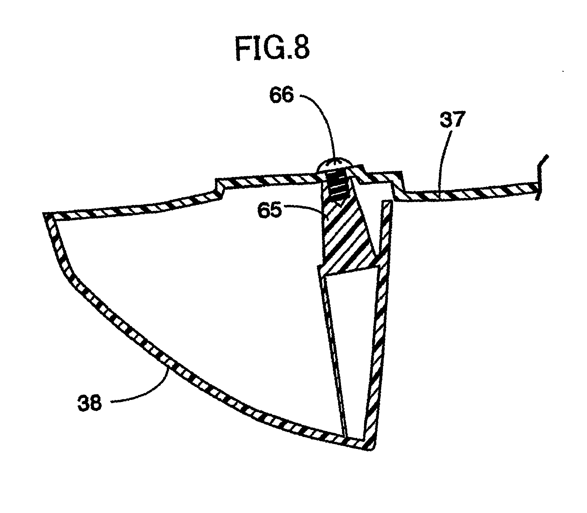

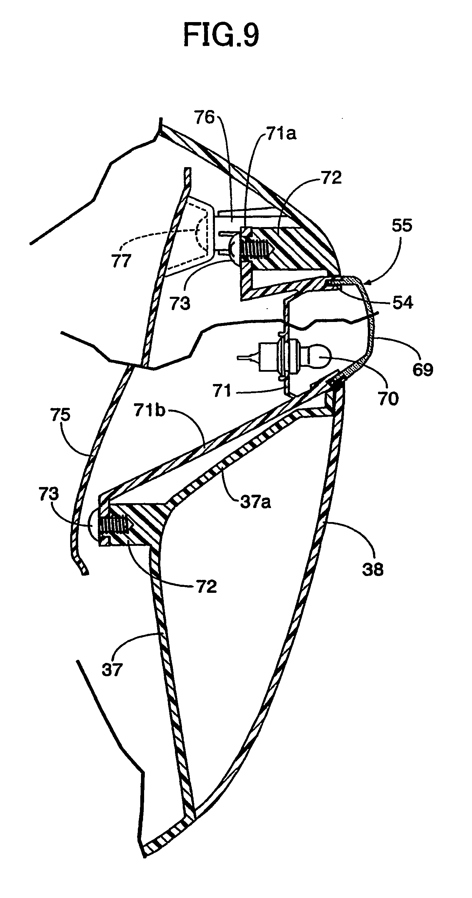

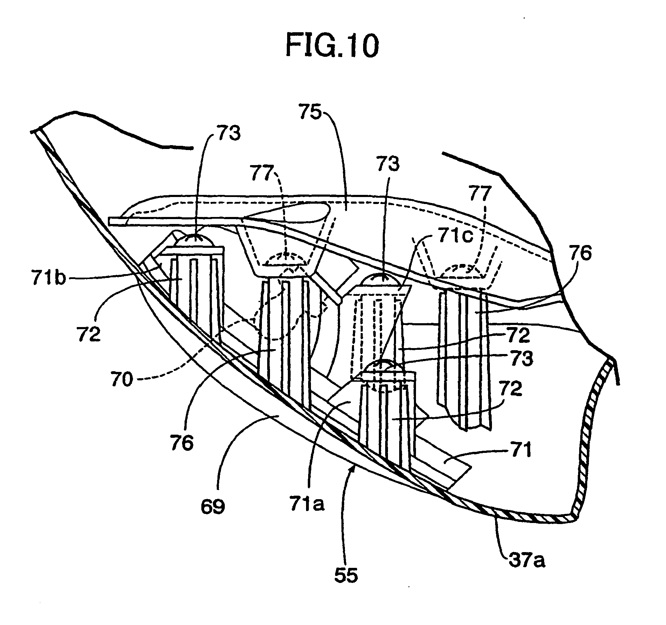

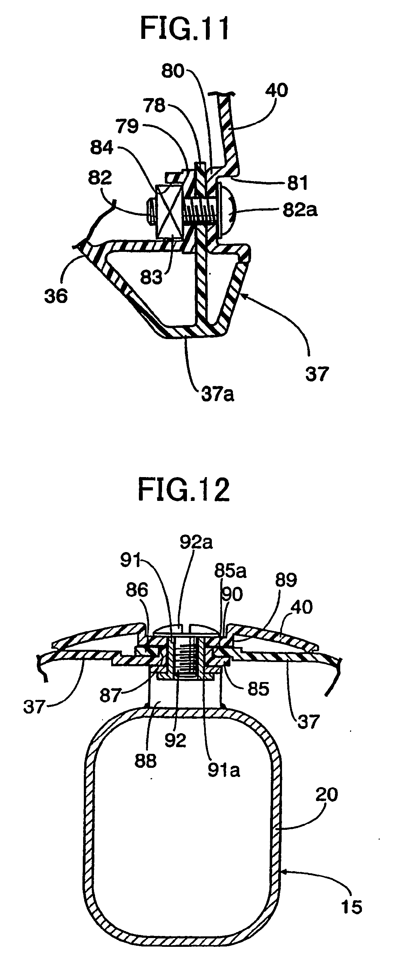

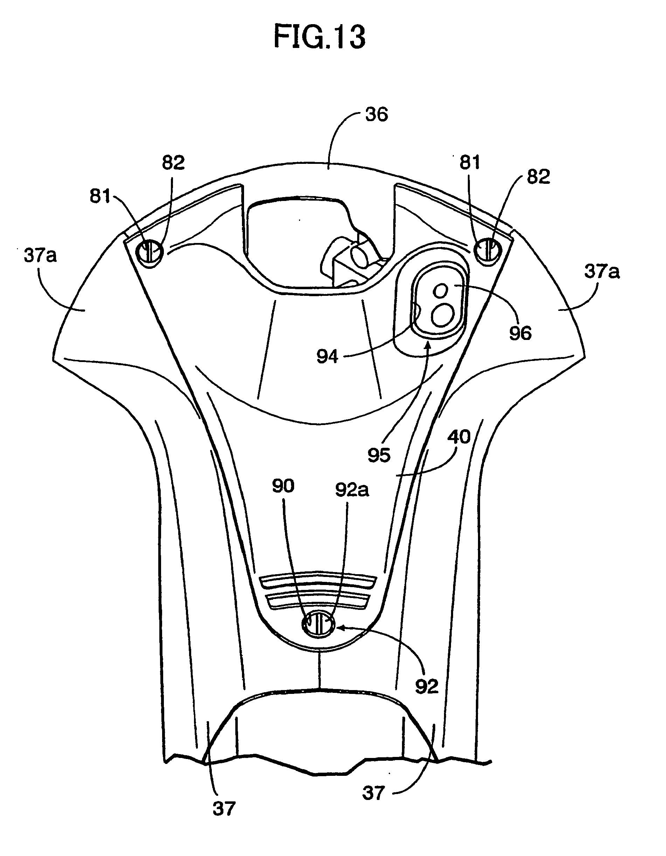

Figs. 1 to 13 show an embodiment of the present invention. Fig. 1 is a general side view of a motor cycle; Fig. 2 is an enlarged front view viewed in the direction indicated by an arrow 1 in Fig. 1; Fig. 3 is a enlarged side view showing a front portions of the vehicle body frame and the vehicle body cover; Fig. 4 is a drawing viewed in the direction of an arrow 4 in Fig. 1; Fig. 5 is a drawing viewed in the direction of an arrow 5 in Fig. 3; Fig. 6 is a cross-sectional view taken along the line 6-6 in Fig. 3; Fig. 7 is a side view of a leg shield; Fig. 8 is a cross-sectional view taken along the line 8-8 in Fig. 3; Fig. 9 is across-sectional view taken along the line 9-9 in Fig. 3; Fig. 10 is a cross-sectional view taken along the line 10-10 in Fig. 3; Fig. 11 is a cross-sectional view taken along the line 11-11 in Fig. 3; Fig. 12 is a cross-sectional view taken along the line 12-12 in Fig. 3; Fig. 13 is a drawing corresponding to Fig. 5 in a state in which the leg shield is removed.

In Fig. 1, a front fork 17 for bearing a front wheel WF is steerably supported by a head pipe 16 provided at a front end of a vehicle body frame 15 of the motorcycle. A bar-shaped steering handle 18 is connected to the upper end of the front fork 17, and a front fender 19 which covers above the upper portion of the front wheel WF is supported by the front fork 17.

The vehicle body frame 15 includes the head pipe 16 at the front end, a main pipe 20 extending rearward and downward from the head pipe 16, a pair of left and right rear pipes 21... fixed to the rear end of the main pipe 20 and extending rearward and upward therefrom, seat rails 22...integrally connected to rear ends of the rear pipes 21... respectively, and extending substantially horizontally, and a pair of left and right supporting frames 23... extending from the rear ends of the main pipe 20 downward.

Rear forks 24 for bearing the rear wheel WR is supported by the supporting frames 23...and rear cushions 25 are provided between the rear portions of the vehicle body frame 15 and the rear forks 24.

At the midsection of the vehicle body frame 15, a power unit P including an engine E and a transmission M is mounted so as to be positioned below the main pipe 20, and the output from the transmission M is transmitted to the rear wheel WR via a chain 26.

An air cleaner 27 and a carburetor 28 provided between the air cleaner 27 and the engine E are disposed above the engine E, and a fuel tank 29 to be disposed above the rear wheel WR and a storage box 30 to be disposed in front of the fuel tank 29 are supported by the rear portion of the vehicle body frame 15. A stand 32 is rotatably mounted via a stand shaft 31 at the lower portions of supporting frames 23... of the vehicle body frame 15.

Referring also to Fig. 2 to Fig. 5, portion of the vehicle body frame 15 other than the supporting frames 23..., part of the engine E, the air cleaner 27, the carburetor 28, the fuel tank 29, and the storage box 30 are covered by a vehicle body cover 35 formed of synthetic resin.

The vehicle body cover 35 includes a pair of left and right main pipe side covers 37... connected to both sides of a front cover 36 so as to cover the front cover 36 which covers the head pipe 16 from the front, the main pipe 20, part of the engine E, the air cleaner 27, and the carburetor 28 from the sides; a pair of left and right leg shields 38... detachably attached to the main pipe side covers 37... so as to cover the front portions of the both main pipe side covers 37... from the sides; an under cover 39 for connecting the lower portions on the front sides of the both main pipe side covers 37...; a main pipe upper cover 40 which connects between the upper portions of the main pipe side covers 37... so as to cover the head pipe 16 from the rear side and to cover the front portion of the main pipe 20 from above; a center cover 41 to be joined to rear portions of the both main pipe side covers 37... and the main pipe upper cover 40 so as to cover the midsection of the main pipe 20 from above; a pair of left and right side covers 42... connected to the rear portions of the both main pipe side covers 37... so as to cover the rear portion of the main pipe 20 and the both rear pipes 21... from the sides; a front body cover 43 extending upward from the rear portion of the center cover 41 and the upper portions of the both side covers 42... in substantially U-shape opened rearward in lateral cross section; and a pair of left and right rear body covers 44... connected to the rear portions of the both side covers 42... and the rear portion of the front body cover 43 so as to cover the both seat rails 22... from the sides.

Referring again to Fig. 1, disposed on the front body cover 43 and the both rear body covers 44...is a tandem-type riding seat 45 supported by the front body cover 43 at a front end thereof so as to be capable of opening and closing. Arranged below the riding seat 45 in the closed state are the storage box 30 capable of storing and taking out a helmet 46 or the like when the riding seat 45 is opened, and the fuel tank 29 which allows oil feeding when the riding seat 45 is opened is disposed on the rear side of the storage box 30. The sides of the storage box 30 are covered by the side covers 42... and the front body cover 43 and the sides of the fuel tank 29 are covered by the rear body cover 44.

A rear fender 47 which covers the rear wheel WR from above is connected to the rear body covers 44.... Openings 48... are formed between the rear portions of the main pipe side covers 37... and the lower front portions on both sides of the center cover 41, and the openings 48... are provided with louvers 49... for sucking cold wind toward the power unit P.

Grips 50... are provided on both ends of the steering handle 18, and the portion of the steering handle 18 other than the portions to be provided with the grips 50 is covered by a handle cover 51 formed of synthetic resin.

A headlight opening 52 is provided at the center portion of a front face of the handle cover 51, and a headlight 53 is mounted to the handle cover 51 so as to be exposed from the headlight opening 52. Protruded portions 37a... protruded from both side ends of the front cover 36 sideward are integrally provided on the ends of the main pipe side covers 37... of the vehicle body cover 35, and front winkers 55... exposed from front winker openings 54... provided on the protruded portion 37a... are mounted to the protruded portions 37a....

As clearly shown in Fig. 1 and Fig. 3, the main pipe side cover 37 extends in the fore-and-aft direction along the side of the vehicle body frame 15 so as to incline upward toward the front for covering the side of the main pipe 20, part of the engine E, the air cleaner 22, and the carburetor 23, and is secured to brackets 58, 59 (see Fig. 1) provided on the main pipe 20 of the vehicle body frame 15 by bolts 60....

As shown in Fig. 6, at the front end of the main pipe side cover 37, a protruded portion 37a formed substantially in a V-shape opening inward in lateral cross section is provided integrally from both side ends of the front cover 36 so as to protrude sideward. On the other hand, the front cover 36 is provided, for example, with three insertion holes 62 (see Fig. 4), and the front cover 36 is fixed to the head pipe 16 side of the vehicle body frame 15 by bolts 61... to be inserted through the through holes 62. In addition, each of the both side ends of the front cover 36 is superimposed by the inside of the front face of the protruded portion 37a at the front end of the main pipe side cover 37, and a positioning pin 64 projected from the front cover 36 is fitted into a positioning hole 63 provided on the protruded portion 37a at the superimposed portion so that the relative position between the front cover 36 and the main pipe side cover 37 is determined.

The leg shield 38 is formed as shown in Fig. 7, and is disposed to cover the front portion of the main pipe side cover 37 so as to continue from the lower end of the protruded portion 37a, and the lateral cross-sectional shape of the leg shield 38 is formed into substantially V-shape opening toward the inside as shown in Fig. 8. In addition, the inner surface of the leg shield 38 is provided with a plurality of mounting bosses 65... which come into abutment with the outer surface of the portion the main pipe side cover 37 to be covered by the leg shield 38 so as to be arranged in two rows, whereby the leg shield 38 is mounted to the main pipe side cover 37 by screwing screw members 66... to be inserted into the main pipe side cover 37 from the inner surface side into the respective mounting bosses 65. Therefore, by releasing the respective screw members 66..., the leg shield 38 can be removed from the main pipe side cover 37, and hence the leg shield 38 is detachably mounted to the main pipe side cover 37.

The under cover 39 is formed substantially into a U-shape opening upward, and the upper portions at both sides are detachably attached to the main side pipe covers 37... by the screw members 67...., and the lose portion on both sides are detachably attached to the main pipe side cover 37 by the screw members 68....

In Fig. 9, a front winker opening 54 is formed on the side end of the protruded portion 37a of the main pipe side cover 37, and a front winker 55 is mounted to the main pipe side cover 37 with a lens 69 exposed from the front winker opening 54.

Referring also to Fig. 10, the front winker 55 includes a base 71 formed of synthetic resin for supporting the bulb 70, and the lens 69 for covering the base 71 from the front, and a plurality of, for example, three supporting arms 71a, 71b, 71c provided integrally with the base 71 are mounted to mounting bosses 72... projected from the inner surface of the protruded portion 37a at positions around the front winker opening 54 by screw members 73....

The front winker 55 is to be covered by an inner shield plate 75 from the inside, and the inner shield plate 75 is mounted to a plurality of, for example, three mounting bosses 76... projected from the inner surface of the protruded portion 37a by screw members 77....

In Fig. 11, a plate-shaped mounting plate portion 78 is integrally formed so as to project from the inner surface of the protruded portion 37a of the main pipe side cover 37, and the mounting plate portion 78 is interpose between the substantially L-shaped clamping plate portion 79 formed integrally with the front cover 36 and clamping projection 80 formed on the upper portion of a main pipe upper cover 40. The clamping projection 80 is formed with a recess 81 on the opposite side from the mounting plate portion 78, and a screw member 82 to be inserted into the clamping projection 80, the mounting plate portion 78 and the clamping plate portion 79 so as to insert a head portion 82a into the recess 81 is screwed into a nut 83 fitted into a fitting recess 84 formed on the surface of the clamping plate portion 79 opposite from the mounting plate portion 78 so as to prohibit rotation, whereby the front cover 36, the main pipe side cover 37, and the main pipe upper cover 40 are secured together with the mounting plate portion 78 of the main pipe side cover 37 interposed between the clamping plate portion 79 of the front cover 36 and the clamping projection 80 of the main pipe upper cover 40.

In Fig. 12, joint plate portions 85, 86 which are superimposed one on another are provided at the rear upper portions of the left and right main pipe side covers 37, 37, and positioning cylinder 85a provided on one of the joint plate portion 85 is fitted into a positioning hole 87 provided on the other joint plate portion 86, whereby the relative positions of the rear upper portions of the both main pipe side covers 37, 37 are determined.

On the other hand, a supporting bracket 88 which comes into abutment with the superimposed joint plate portions 85, 86 from below is fixed to the main pipe 20 of the vehicle body frame 15, and a projection 89, which defines a recess 90 on the outer side of the main pipe upper cover 40 is integrally formed so as to interpose the superimposed joint plate portions 85, 86 with respect to the supporting bracket 88.

A nut 91 having an engaging flange 91a which engages the supporting bracket 88 from below at the lower end and is formed into a cylindrical shape is screwed into the supporting bracket 88, the positioning cylinder 85a and the projection 89, and a screw member 92 whereof a head portion 92a accommodated in the recess 90 is screwed into the nut 91. Accordingly, the main pipe upper cover 40 and the upper portions of the main pipe side covers 27, 37 are secured together to the supporting bracket 88 of the main pipe 20.

A main key mounting hole 94 is provided on the right side at the front portion of the main pipe upper cover 40, and a main key 95, which is a shutter key having a shutter 96 which can close the key hole, not shown, is mounted to the head pipe 16 so as to expose the shutter 96 from the main key mounting hole 94.

The operation of the present embodiment will be described. Since protruded portions 37a... protruded sideward from both side ends of the front cover 36 which covers the head pipe 16 from the front are provided at the front ends of the main pipe side covers 37... which cover the main pipe 20 of the vehicle body frame 15 from the sides, and the leg shields 38... continuing from the lower portions of the protruded portions 37a... are detachably attached to the main pipe side covers 37..., even though the leg shield 38 is removed as shown in Fig. 13, the protruded portion 37a carries out part of the function of the leg shield 38 and the joint portion of the leg shield 38 with respect to the protruded portion 37a can hardly be recognized from the side, flexibility in design can be increased by removing the leg shield 38.

Since the protruded portion 37a is formed into a V-shape opened toward the inside in lateral cross section, rigidity of the protruded portion 37a can be improved. Since the leg shield 38 is also formed into a V-shape opened toward the inside in lateral cross section, the rigidity of the leg shield 38 can also be improved.

Since the front winker 55 is formed on the protruded portion 37a, the distance between the left and right front winkers 55... can be set to a large value and, in addition, the front winker 55 is prevented from coming apart from the vehicle body cover 35 even when the leg shield 38 is removed.

Furthermore, a main pipe upper cover 40 for covering the main pipe 20 from above is detachably joined to the upper portions of the pair of left and right main pipe side covers 37..., and the main pipe upper cover 40 is provided with the main key mounting hole 94. Therefore, when the specification of the main key 95 is changed, only the main pipe upper cover 40 which connects the upper portions of the pair of left and right main pipe side covers 37... must be replaced. Since what must be replaced is a main pipe upper cover 40, that is, a relatively small cover component, part replacement of the vehicle body cover 35 in association with the change of the specification of the main key 95 can be achieved easily at a low cost.

Since the front cover 36, the main pipe side cover 37, and the main pipe upper cover 40 are secured together in a sandwich structure in which one 37 of these covers 36, 37, 40 is interposed between the remaining two covers 36, 40, the number of components for joining the front cover 36, the main pipe side cover 37, and the main pipe upper cover 40 can be reduced.

### Industrial Applicability:

In a motorcycle in which a head pipe is covered by a front cover from a front and a main pipe is covered by a main pipe side cover from a side, even when the leg shield is removed, a portion of the vehicle body cover other than a leg shield carries out part of the function of the leg shield. Moreover, the joint portion of the leg shield is designed so as to be hardly recognized from the side view. Thereby, a flexibility in design is increased.

## Claims

1. A vehicle body cover structure (35) of a motorcycle comprising:
a front cover (36) that covers a head pipe (16) from a front of the head pipe (16);
a main pipe side cover (37) that covers a main pipe (20) from a side of the main pipe (20);
a protruded portion (37a) protruding from both side ends of the front cover (36) in sideward directions;
a front winker (55) mounted on the protruded portion (37a); and
a leg shield (38) continuing from the lower side of the protruded portion (37a) and detachably mounted to the main pipe side cover (37)
**characterized in that** the protruded portion (37a) is integrally provided on an end of the main pipe side cover (37).

2. The vehicle body cover structure (35) according to claim 1,
wherein the head pipe (16) steerably supports a front fork (17),
the main pipe (20) extends from the head pipe (16) downward and rearward, and
an engine (E) is mounted below the main pipe (20).

3. The vehicle body cover structure (35) according to claim 1,
wherein the protruded portion (37a) is formed substantially into a V-shape opened toward the inside in lateral cross section.

4. The vehicle body cover structure (35) according to claim 1,
wherein the leg shield (38) is formed substantially into a V-shape opened toward the inside in lateral cross-section.

## Patentansprüche

1. Fahrzeugaufbauabdeckungsstruktur (35) eines Kraftrads umfassend: eine Frontabdeckung (36), die ein Kopfrohr (16) von einer Vorderseite des Kopfrohrs (16) her abdeckt;
eine Hauptrohrseitenabdeckung (37), die ein Hauptrohr (20) von einer Seite des Hauptrohrs (20) her abdeckt;
einen Vorsprungsabschnitt (37a), der von beiden Seitenenden der Frontabdeckung (36) in seitliche Richtungen vorsteht;
einen vorderen Blinker (55), der an dem Vorsprungsabschnitt (37a) angebracht ist; und
ein Beinschild (38), das sich von der Unterseite des Vorsprungsabschnitts (37a) fortsetzt und an der Hauptrohrseitenabdeckung (37) abnehmbar angebracht ist,
**dadurch gekennzeichnet, dass** der Vorsprungsabschnitt (37a) an einem Ende der Hauptrohrseitenabdeckung (37) integral vorgesehen ist.

2. Die Fahrzeugrumpfabdeckungsstruktur (35) nach Anspruch 1, worin das Kopfrohr (16) eine vordere Gabel (17) lenkbar trägt,
sich das Hauptrohr (20) von dem Kopfrohr (16) nach hinten und unten erstreckt; und
ein Motor (E) unter dem Kopfrohr (20) angebracht ist.

3. Die Fahrzeugaufbauabdeckungsstruktur (35) nach Anspruch 1, worin der Vorsprungsabschnitt (37a) im Wesentlichen zu einer V-Form ausgebildet ist, die sich im seitlichen Querschnitt zur Innenseite hin öffnet.

4. Fahrzeugaufbauabdeckungsstruktur (35) nach Anspruch 1, worin das Beinschild (38) im Wesentlichen zu einer V-Form ausgebildet ist, die sich im seitlichen Querschnitt zur Innenseite hin öffnet.

## Revendications

1. Structure d'enveloppe (35) pour carrosserie de véhicule d'une motocyclette, comprenant :
une enveloppe avant (36) qui recouvre un tube de tête (16) à partir d'une partie avant du tube de tête (16) ;
une enveloppe latérale de tube principal (37) qui recouvre un tube principal (20) à partir d'un côté du tube principal (20) ;
une partie en saillie (37a) faisant saillie à partir des deux extrémités latérales de l'enveloppe avant (36) dans des directions latérales ;
un clignotant avant (55) monté sur la partie en saillie (37a) ; et
un protège-jambes (38) continuant à partir du côté inférieur de la partie en saillie (37a) et monté de manière détachable sur l'enveloppe latérale de tube principal (37),
**caractérisée en ce que** la partie en saillie (37a) est prévue d'un seul tenant sur une extrémité de l'enveloppe latérale de tube principal (37).

2. Structure d'enveloppe (35) pour carrosserie de véhicule selon la revendication 1, dans laquelle le tube de tête (16) supporte de manière orientable une fourche avant (17), le tube principal (20) s'étend à partir du tube de tête (16) vers le bas et l'arrière, et
un moteur (E) est monté au-dessous du tube principal (20).

3. Structure d'enveloppe (35) pour carrosserie de véhicule selon la revendication 1, dans laquelle la partie en saillie (37a) est formée sensiblement selon une forme de V ouvert vers l'intérieur en coupe latérale.

4. Structure d'enveloppe (35) pour carrosserie de véhicule selon la revendication 1, dans laquelle le protège-jambes (38) est formé sensiblement selon une forme de V ouvert vers l'intérieur en coupe latérale.
